# FASCICULE DE BREVET EUROPEEN

(11) **EP 4 295 177 B1**
(45) Date de publication et mention de la délivrance du brevet: **11.06.2025**
(21) Numéro de dépôt: 22707353.3
(22) Date de dépôt: 03.02.2022
(51) Int. Cl.: G01S 19/21, G01S 19/39, G01S 19/47, G01S 19/14

(54) **NAVIGATION LORS D'UNE OPÉRATION DE LEURRAGE D'UN RÉCEPTEUR DE SIGNAUX SATELLITAIRES**
NAVIGATION WÄHREND EINES TÄUSCHUNGSBETRIEBS EINES SATELLITENSIGNALEMPFÄNGERS
NAVIGATION DURING A DECEPTION OPERATION OF A SATELLITE SIGNAL RECEIVER

(30) Priorité: 19.02.2021 FR 2101628
(43) Date de publication de la demande: 27.12.2023
(73) Titulaire: Safran Electronics & Defense, 75015 Paris (FR)
(72) Inventeur: DAVAIN, Loïc, 77550 MOISSY-CRAMAYEL (FR); NGUYEN, Julien, 77550 MOISSY-CRAMAYEL (FR)
(74) Mandataire: Cabinet Boettcher
(86) Numéro de dépôt international: PCT/EP2022/052632
(87) Numéro de publication internationale: WO 2022/175105

(56) Documents cités:
- EP-A1- 3 680 617
- US-A1- 2018 088 241
- YANG LIU ET AL: "Impact Assessment of GNSS Spoofing Attacks on INS/GNSS Integrated Navigation System", SENSORS,, vol. 18, 1 January 2018 (2018-01-01), pages 1433, XP002800173

## Description

La présente invention concerne le domaine de la navigation et plus précisément le positionnement et la navigation au moyen notamment de la réception de signaux satellitaires émis par des satellites appartenant à une constellation de satellites répartis autour de la Terre.

### ARRIERE PLAN DE L'INVENTION

Le positionnement par satellites (ou GNSS de l'anglais « Global Navigation Satellite System ») est mis en œuvre principalement par les systèmes GPS, Galileo, GLONASS et BeiDou. L'invention concerne plus particulièrement la navigation inertielle aidée par la réception des signaux satellitaires.

Le positionnement satellitaire consiste à recevoir des signaux émis par des satellites dont la position est connue et de déduire de la durée (ou temps de vol), entre l'émission et la réception de chacun des signaux, une mesure dite de pseudo-distance séparant le récepteur des signaux satellitaires (communément, et parfois improprement, appelés récepteurs GPS) et chacun des satellites dont le signal a été reçu (chaque signal comportant un identifiant du satellite et l'horaire d'émission du signal). Ainsi, il suffit de disposer des signaux de quatre satellites pour estimer la latitude, la longitude et l'altitude du récepteur, ainsi qu'un écart de temps, mais le positionnement est d'autant plus précis qu'est grand le nombre de satellites dont les signaux ont été pris en compte par le récepteur pour calculer sa position.

Il en résulte que ce système de positionnement, qui est relativement précis, s'est largement répandu et de nombreux véhicules sont désormais équipés d'un récepteur de signaux satellitaires. Du fait de la baisse des coûts des récepteurs de signaux satellitaires et de l'électronique grand public, la plupart des gens disposent en outre de téléphones portables de type smartphone (ou ordiphone) eux-mêmes pourvus d'un récepteur de signaux satellitaires.

En parallèle de ce développement des récepteurs de signaux satellitaires, sont apparus des dispositifs leurrants pour leurrer ces récepteurs de signaux satellitaires (on parle de « leurrage » ou de « spoofing » des récepteurs). Un tel dispositif comprend une unité électronique de traitement reliée à un émetteur de signaux radiofréquences pour émettre des signaux frauduleux ayant les caractéristiques des signaux satellitaires. Plus précisément, l'unité électronique de traitement est agencée pour élaborer, à partir d'une position initiale réelle d'un récepteur de signaux satellitaires, des signaux frauduleux qui, lorsqu'ils sont captés par le récepteur de signaux satellitaires, conduisent le récepteur de signaux satellitaires à calculer une position erronée. La position initiale réelle du récepteur de signaux satellitaires peut être détectée par exemple au moyen d'un télémètre laser ou communiquée par le véhicule embarquant le récepteur de signaux satellitaires comme l'imposent certaines règles de navigation, notamment aérienne et maritime (signaux ADS-B ou AIS émis par un véhicule pour communiquer sa position à ses voisins).

Pour que les signaux frauduleux soient pris en compte par le récepteur de signaux satellitaires, il ne suffit pas d'émettre les signaux frauduleux avec une puissance supérieure aux signaux satellitaires originaux. Il faut également que les signaux frauduleux aient la même phase de code et un effet Doppler se trouvant dans la même gamme que celles des signaux satellitaires préalablement reçus par le récepteur de signaux satellitaires. Si le premier signal frauduleux reçu est cohérent avec la position calculée dernièrement par le récepteur de signaux satellitaires et avec les signaux satellitaires reçus antérieurement, et si les signaux frauduleux ultérieurement reçus sont cohérents entre eux, les signaux frauduleux seront utilisés par le récepteur de signaux satellitaires comme s'ils étaient de vrais signaux satellitaires et l'erreur sur la position réelle du récepteur de signaux satellitaires ne pourra pas être détectée.

Il est connu des systèmes de navigation inertielle hybride qui fusionnent des données inertielles de positionnement provenant d'une centrale inertielle de navigation et des données satellitaires de positionnement provenant d'un récepteur de signaux satellitaires. Ces systèmes de navigation intègrent un ou plusieurs filtres de Kalman agencés pour que la navigation hybride soit recalée sur les données satellitaires de positionnement. Le filtre de Kalman est protégé par un test d'innovation pour détecter les mesures aberrantes et les rejeter. Cependant, si les signaux frauduleux ont suffisamment de cohérence, alors ils peuvent satisfaire ce test d'innovation et il est donc ainsi possible d'amener la navigation hybride à suivre la position leurrée. En outre, si on veut éviter les fausses alarmes, il est nécessaire de mettre un seuil de détection relativement haut, ce qui accentue le risque de leurrage. Or, dans ces systèmes, ce sont les données satellitaires de positionnement qui permettent de compenser les erreurs des données inertielles de positionnement sur le long terme de sorte que des signaux frauduleux entraîneraient une erreur de navigation malgré l'hybridation des données satellitaires de positionnement avec des données inertielles de positionnement.

On comprend donc que la mise en œuvre de tels dispositifs leurrants peut être préjudiciable à la sécurité d'un véhicule leurré et éventuellement à celle des véhicules évoluant dans la même zone que le véhicule leurré.

US 10 641 906 B2 décrit un système de navigation hybride combinant GNSS et INS, avec des mécanismes de détection des anomalies, notamment des attaques de leurrage. Cependant, il ne mentionne pas explicitement une recalage de la position de secours basé sur une navigation opérationnelle antérieure ni l'utilisation d'un cumul de corrections de position pour initier la navigation de secours.

EP 3 680 617 A1 traite de la continuité de la navigation dans des environnements GNSS perturbés. Bien que des techniques de recalage des données GNSS avec des mesures inertiels soient mentionnées, cet document ne divulgue pas un mécanisme où une navigation de secours est recalée en fonction de positions précédentes corrigées par des cumul de corrections.

YANG LIU ET AL: "Impact Assessment of GNSS Spoofing Attacks on INS/ GNSS Integrated Navigation System", SENSORS,, vol. 18, 1 janvier 2018 (2018-01-01), page 1433, analyse les impacts des attaques de leurrage GNSS sur des systèmes INS/GNSS intégrés et propose des méthodes de détection. Cependant, il se concentre sur l'identification et l'atténuation des effets du leurrage plutôt que sur une stratégie sophistiquée de recalage et correction pour une navigation de secours.

### OBJET DE L'INVENTION

L'invention a notamment pour but de limiter l'impact d'une opération de leurrage sur une navigation hybride.

### RESUME DE L'INVENTION

A cet effet, on prévoit, selon l'invention un procédé de navigation au moyen d'un récepteur de signaux satellitaires embarqué dans un véhicule comprenant une unité électronique de navigation reliée au récepteur de signaux satellitaires et à une centrale de positionnement inertiel pour calculer une navigation opérationnelle hybridée à partir de données inertielles de positionnement et de données satellitaires de positionnement en appliquant un test d'innovation, le procédé comprenant les étapes de :
- calculer une première navigation de référence, hybridée à partir des données inertielles de positionnement avec des corrections de position déterminées à partir des données satellitaires de positionnement ;
- calculer une deuxième navigation de référence à partir des données non satellitaires de positionnement ;
- effectuer un cumul des corrections de position fournies par la première navigation de référence ;
- détecter une opération de leurrage du récepteur de signaux satellitaires et utiliser comme navigation de secours la deuxième navigation de référence après avoir recalé la position fournie par la deuxième navigation de référence lors de la détection de l'opération de leurrage sur la position fournie par la navigation opérationnelle puis avoir corrigé cette position en fonction du cumul des corrections de position pour obtenir une position de départ de la navigation de secours.

Si une opération de leurrage est en cours, les corrections de position fournies par la première navigation de référence sont frauduleuses. Ainsi, ayant connaissance du cumul des corrections frauduleuses de position au moment de la détection de l'opération de leurrage, il est possible de corriger la navigation opérationnelle en retranchant ce cumul de la position fournie par la navigation opérationnelle. Cependant, si l'on utilise la navigation opérationnelle, l'erreur de vitesse résultant de l'opération de leurrage n'est pas corrigée. En utilisant la deuxième navigation de référence en partant d'une position de départ recalée sur celle fournie par la navigation opérationnelle après correction en fonction du cumul des corrections de position, il est possible d'obtenir une navigation de secours entretenue, sans erreur de vitesse due au leurrage, qui soit relativement proche de la trajectoire réelle suivie.

L'invention a également pour objet une unité électronique de navigation programmée pour mettre en œuvre le procédé ci-dessus.

D'autres caractéristiques et avantages de l'invention ressortiront à la lecture de la description qui suit d'un mode de réalisation particulier et non limitatif de l'invention.

### BREVE DESCRIPTION DES DESSINS

Il sera fait référence aux dessins annexés, parmi lesquels :

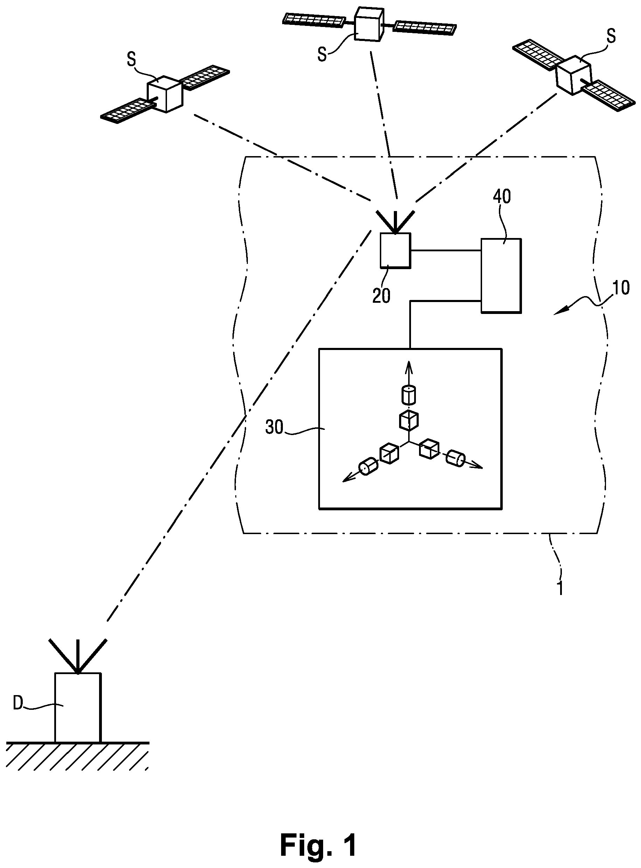

La figure 1 est une vue schématique d'un dispositif pour la mise en œuvre du procédé de l'invention lors d'une opération de leurrage ;
La figure 2 est une vue schématique des trajectoires fournies par les différentes navigations, dans un plan horizontal.

### DESCRIPTION DETAILLEE DE L'INVENTION

En référence à la figure, l'invention est ici décrite en application à un aéronef 1 équipé d'un système de navigation hybridé généralement désigné en 10 comprenant un récepteur de signaux satellitaires 20 et une centrale de positionnement inertiel 30 qui sont reliés à une unité électronique de navigation 40.

Le récepteur de signaux satellitaires 20 est agencé, de manière connue en lui-même, pour recevoir des signaux satellitaires de positionnement émis par des satellites d'une constellation de satellites S d'au moins un système de positionnement par satellites (GNSS) - tel que GPS, Galileo, GLONASS et BeiDou - et pour calculer, à partir de ces signaux satellitaires, des données satellitaires de positionnement telles qu'une pseudo-distance, une mesure de phase, une latitude, une longitude, une altitude, et un écart de temps. Un tel récepteur est connu en lui-même. La centrale inertielle 30 comprend une unité de mesure inertielle comportant des capteurs inertiels, ici classiquement trois accéléromètres disposés selon les axes d'un repère de mesure et trois gyromètres disposés pour mesurer des rotations de ce repère de mesure par rapport à un repère de référence. La centrale de positionnement inertiel 30 comprend en outre, de manière connue en elle-même, une unité électronique de traitement (processeur ou autre circuit électronique capable de calcul) agencée pour déterminer des données inertielles de positionnement, telles que des données de position, d'attitude et de vitesses, à partir des signaux de mesure produits par les capteurs inertiels. Une telle centrale est connue en elle-même.

L'unité électronique de navigation 40 comprend un ou des processeurs et une mémoire contenant au moins un programme contenant des instructions mettant en œuvre le procédé de l'invention. En particulier, l'unité électronique de navigation 40 est programmée pour calculer à des instants prédéterminés les coordonnées (latitude et longitude) de point de passage du véhicule en utilisant les données de positionnement fournies par le récepteur de signaux satellitaires 20 et la centrale de mesure inertielle 30 à chacun de ces instants. L'ensemble de ces points forment une route ou une trajectoire, généralement appelée « navigation », qui doit coïncider au plus près avec la trajectoire réelle suivie par le véhicule.

Lors de l'exécution de ce programme, l'unité électronique de navigation 40 calcule une navigation opérationnelle primaire hybridée à partir des données inertielles de positionnement et des données satellitaires de positionnement. La navigation hybridée peut être basée sur un couplage lâche en position (et/ou vitesse) ou un couplage serré en pseudo-distance (et/ou delta range). Pour réaliser l'hybridation, le programme met en œuvre un filtre de Kalman qui comprend une banque de filtres et qui est protégé par un test d'innovation visant à vérifier la cohérence des données satellitaires de positionnement entre elles. Le test d'innovation est connu en lui-même et permet de détecter et rejeter les mesures aberrantes.

La navigation opérationnelle primaire est utilisée en mode nominal pour le pilotage du véhicule afin de faire suivre au véhicule une route prédéterminée.

Le procédé de l'invention vise à détecter une opération de leurrage lors de laquelle un dispositif leurrant D, ici au sol, connaissant la position réelle de l'aéronef 1, émet des signaux satellitaires frauduleux destinés à être reçu par le récepteur de signaux satellitaires 20 et à être pris en compte dans le calcul de la navigation hybridée à la place des signaux satellitaires authentiques pour amener l'aéronef 1 sur une trajectoire réelle différente de celle indiquée par le système de navigation (c'est-à-dire différente de la navigation opérationnelle primaire). La structure et le fonctionnement du dispositif leurrant D sont connus en eux-mêmes et ne seront pas plus décrits ici. Afin de détecter une telle opération de leurrage, l'unité électronique de navigation 40 est en outre agencée pour exécuter des processus de détection de leurrage, processus qui sont ici avantageusement combinés.

Pour mettre en œuvre le procédé de détection de leurrage de l'invention, et quel que soit le processus mis en œuvre, l'unité électronique de navigation 40 calcule une autre navigation, à savoir une première navigation de référence, hybridée à partir des données inertielles de positionnement avec des corrections de positions déterminées à partir des données satellitaires de positionnement. La première navigation de référence est ainsi recalée sur les données satellitaires de positionnement.

La première navigation de référence n'est pas une navigation opérationnelle : elle ne sert qu'à détecter le leurrage. Pour forcer la première navigation de référence à être sensible (ou sujette) au leurrage, le test d'innovation est désactivé.

Les deux premiers processus de détection mis en œuvre nécessitent de :
- récupérer les corrections de position en latitude et en longitude fournies par la première navigation de référence ;
- effectuer une analyse statistique des corrections de position fournies par la première navigation de référence et en déduire une existence ou une absence d'opération de leurrage du récepteur de signaux satellitaires.

Lors de l'élaboration de la première navigation de référence, qui est hybridée, l'unité électronique de navigation 40 détermine périodiquement une correction de position entre une position purement inertielle calculée à partir des données inertielles de positionnement et une position purement satellitaire calculée à partir des données satellitaires de positionnement. Ce sont ces corrections successives de position qui sont récupérées en vue de la détection de leurrage. Les corrections peuvent être entretenues au fur et à mesure de leur estimation dans le cas d'un filtre en boucle ouverte, ou appliquées à chaque instant à la navigation inertielle calculée dans le cas d'un filtre en boucle fermée.

Selon un premier processus de détection, l'analyse statistique comprend le cumul des corrections de position fournies par la première navigation de référence et le calcul d'une moyenne des corrections de position cumulées. Le cumul des corrections de position est ici effectué sur une fenêtre de temps glissante, par exemple d'une durée de trois minutes. On notera que le cumul des corrections fournit avantageusement une image pertinente de l'erreur de positionnement provoquée par le leurrage lorsque celui-ci est présent.

Il est ensuite procédé à la comparaison du cumul des corrections de position à un premier seuil prédéterminé. Le premier seuil est fixé pour correspondre à la limite supérieure acceptable pour que le cumul calculé corresponde à celui d'erreurs de position aléatoires en tenant compte d'une probabilité acceptable de fausse alerte et d'une probabilité acceptable de non détection. Il est tenu compte également des caractéristiques statistiques (moyenne et écart-type) normales des valeurs considérées, c'est-à-dire en l'absence de leurrage.

L'existence d'une opération de leurrage est validée lorsque la moyenne est supérieure au premier seuil.

Selon le deuxième processus de détection, l'analyse statistique comprend le calcul d'un coefficient de corrélation entre les corrections de position en latitude et les erreurs de position en longitude fournies par la première navigation de référence.

Le coefficient de corrélation est ensuite comparé à un deuxième seuil prédéterminé. Le deuxième seuil est fixé pour correspondre à la limite supérieure acceptable pour que le coefficient de corrélation calculé corresponde à celui de correction de position aléatoires en tenant compte d'une probabilité acceptable de fausse alerte et d'une probabilité acceptable de non détection.

L'existence d'une opération de leurrage est validée lorsque le coefficient de corrélation est supérieur au deuxième seuil.

Alternativement, selon le deuxième processus, l'analyse statistique comprend la détermination de directions de corrections successives à partir des corrections de position en latitude et des corrections de position en longitude fournies par la première navigation de référence. Un coefficient de variabilité des directions de correction est ensuite calculé et comparé à un troisième seuil prédéterminé. Le coefficient de variabilité est ici la variance. Le troisième seuil est fixé pour correspondre à la limite inférieure acceptable pour que le coefficient de variabilité calculé corresponde à celui d'erreurs de position aléatoires en tenant compte d'une probabilité acceptable de fausse alerte et d'une probabilité acceptable de non détection.

L'existence d'une opération de leurrage est validée lorsque le coefficient de variabilité est inférieur au troisième seuil.

On notera qu'on peut également surveiller s'il existe des corrélations avec les corrections des vitesses horizontales (traditionnellement notées Vx et Vy) qui peuvent permettre de détecter une opération de leurrage comme les corrélations entre les corrections de position en latitude et les corrections de position en longitude.

Selon un troisième processus de détection, l'unité électronique de navigation 40 calcule une deuxième navigation de référence uniquement à partir des données inertielles de positionnement.

La deuxième navigation de référence peut résulter de la mise en œuvre d'un filtre de Kalman non recalé.

L'unité électronique de navigation 40 compare ensuite une sortie de la première navigation de référence et une sortie de la deuxième navigation de référence et en déduit une existence ou une absence d'opération de leurrage du récepteur de signaux satellitaires.

Dans la première navigation de référence, le filtre de Kalman est paramétré pour recaler la navigation sur les données satellitaires de sorte que, en cas de leurrage, le filtre de Kalman va produire une modélisation anormale des erreurs des capteurs inertiels. Ainsi, on force la première navigation de référence à suivre les données satellitaires quand bien même elles seraient erronées. Disposer de la première navigation de référence et de la deuxième navigation de référence permet de comparer la dynamique de la navigation inertielle avec la dynamique de la navigation hybridée qui est forcée de suivre les données satellitaires.

L'unité électronique de navigation 40 est agencée pour déterminer un écart entre la vitesse issue de la première navigation de référence et la vitesse issue de la deuxième navigation de référence et pour comparer cet écart à un seuil prédéterminé. Le seuil prédéterminé est égal à un multiple d'un écart-type calculé à partir d'une loi de distribution des écarts de vitesse, le multiple étant de préférence 4.

Selon un quatrième processus de détection de leurrage, l'unité électronique de navigation 40 est agencée pour estimer à partir de la première navigation de référence au moins une estimation d'erreur d'au moins un capteur inertiel de la centrale de positionnement non satellitaire et comparer l'estimation à un seuil prédéterminé. L'unité électronique de navigation 40 est ici agencée pour estimer pour la première navigation de référence au moins une dérive gyrométrique et de comparer la dérive gyrométrique estimée à un seuil prédéterminé. En l'espèce, trois dérives gyrométriques sont ici estimées :
- deux dérives horizontales ;
- une dérive de cap.

Pour chacune de ces trois dérives, le seuil prédéterminé est égal à un multiple d'un écart-type calculé à partir d'une loi de distribution de la dérive, le multiple étant de préférence égal à 4.

On notera que l'utilisation d'un seuil non pas forfaitaire mais basé sur les écart-types calculés par les filtres d'hybridation permet d'améliorer la sensibilité de la détection de leurrage en prenant en compte la qualité courante des navigations calculées, et par la même en prenant en compte les caractéristiques naturelles d'une navigation non recalée (période de Schuler, oscillation 24h).

Selon un cinquième processus de détection, la navigation opérationnelle primaire (qui met en œuvre un test d'innovation) est surveillée afin de s'assurer que le test d'innovation ne remonte pas un taux de rejet supérieur à un seuil prédéterminé représentatif d'une anormalité.

Lorsque l'un des processus de détection révèle une opération de leurrage, il renvoie une alerte. On notera que les processus de détection sont exécutés simultanément par un même programme informatique de sorte que tous les processus de détection soient actifs simultanément et indépendamment.

Néanmoins, le premier et le deuxième processus permettent une détection d'une opération de leurrage plus rapidement que les autres processus de sorte que ces derniers vont le plus souvent servir à confirmer la détection. Pour augmenter la vitesse de détection et s'assurer que le cumul des corrections de position ne dépasse pas la limite de protection horizontale (habituellement appelée HPL) s'il en existe une comme c'est couramment le cas dans l'aviation civile, on choisira de préférence des seuils de détection relativement bas, quitte à augmenter la probabilité de fausse alarme.

On notera également que le deuxième processus est normalement plus rapide que le premier processus.

Le procédé de l'invention, dans ce mode de réalisation particulier, combine les résultats des processus de détection pour évaluer la crédibilité de la menace.

Ainsi, l'unité électronique de navigation 40 peut être programmée pour émettre une alerte de menace crédible dès que l'un des processus de détection a identifié un comportement anormal. L'alerte peut aussi avoir différents niveaux selon que :
- le quatrième processus de détection a émis une alerte pour au moins l'un des capteurs inertiels surveillés ;
- le quatrième processus de détection a émis une alerte simultanément pour plusieurs des capteurs inertiels surveillés ;
- le quatrième processus de détection a émis une alerte simultanément pour tous les capteurs inertiels surveillés ;
- la navigation opérationnelle primaire (qui met en œuvre un test d'innovation) remonte un taux de rejet anormal.

L'unité électronique de navigation 40 est agencée pour établir une note de la menace qui s'incrémente de 1 à chaque fois qu'un des critères ci-dessus est satisfait. La note peut donc être comprise entre 1 et 7. et ;

On pourrait considérer que :
- une note égale à 1 ou 2 indique une menace peu crédible
- une note égale à 3 ou 4 indique une menace potentielle ;
- une note au moins égale 5 indique la présence crédible d'une menace.

On notera qu'il est important de conserver une navigation opérationnelle distincte des deux navigations de référence car le récepteur de signaux satellitaires peut être sujet à une opération de leurrage pendant plusieurs dizaines de minutes : il ne serait donc pas possible de s'en remettre uniquement aux données inertielles de positionnement pour assurer la navigation.

L'invention prévoit ici en outre de corriger la navigation opérationnelle le temps de l'opération de leurrage pour obtenir une navigation opérationnelle de secours.

En effet, si on détecte une opération de leurrage et qu'on s'aperçoit qu'elle a été suffisamment efficace pour tromper la navigation opérationnelle primaire, il n'est plus possible de se fier à la navigation opérationnelle primaire et la deuxième navigation inertielle n'est pas utilisable plus de quelques minutes. Il est donc intéressant de disposer d'une navigation opérationnelle de secours.

Le calcul de la navigation opérationnelle de secours pourrait se limiter à recaler la navigation opérationnelle primaire en utilisant le cumul des corrections de position. Cependant, l'erreur de vitesse induite par l'opération de leurrage ne serait pas corrigée.

Selon une caractéristique particulière de l'invention, la navigation opérationnelle de secours est basée sur la deuxième navigation de référence et le calcul de la navigation opérationnelle de secours comprend les étapes de :
- à l'instant où est détectée une opération de leurrage, recaler la deuxième navigation de référence sur la navigation opérationnelle primaire pour obtenir une position corrigée et recaler la position corrigée en fonction du cumul des corrections de position calculées à partir de la première navigation de référence pour obtenir une position de départ de la navigation opérationnelle de secours ;
- déterminer des positions ultérieures à partir des informations de vitesse fournies par la deuxième navigation de référence.

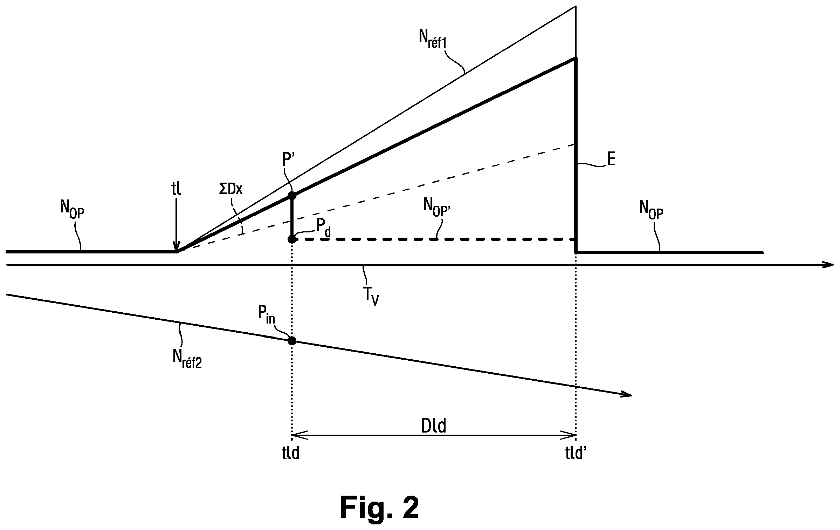

Sur la figure 2 sont représentées :
- la trajectoire réelle Tv du véhicule ;
- la trajectoire Nop issue de la navigation opérationnelle primaire ;
- la trajectoire Nop' issue de la navigation opérationnelle de secours ;
- la trajectoire Nréf1 issue de la première navigation de référence ;
- la trajectoire Nréf2 issue de la deuxième navigation de référence.

La trajectoire Nop issue de la navigation opérationnelle primaire reste proche de la trajectoire vraie jusqu'au début tl de l'opération de leurrage : à partir de cet instant, la trajectoire Nop s'éloigne progressivement de la trajectoire réelle Tv, tout comme la trajectoire Nréf1 issue de la première navigation de référence s'éloigne de la trajectoire réelle Tv dès le début de l'opération de leurrage.

Au moment de la détection de l'opération de leurrage tld, on débute la navigation opérationnelle de secours : la position Pin calculée à partir des données inertielles de positionnement à l'instant de la détection de l'opération de leurrage est recalée sur la position P' qui correspond à la position fournie au même instant par la navigation opérationnelle primaire. La position P' est ensuite corrigée en fonction du cumul des corrections de position ΣDx calculées à partir de la première navigation de référence pour obtenir une position de départ Pd de la navigation opérationnelle de secours. Les positions ultérieures de la trajectoire Nop' issue de la navigation opérationnelle de secours sont calculées à partir de la position de départ Pd et des informations de vitesse fournies par la deuxième navigation de référence.

On comprend que la deuxième navigation de référence sert d'une part à la détection de l'opération de leurrage, puis forme, après recalage, la navigation opérationnelle de secours. Ce recalage permet à la navigation opérationnelle de secours de fournir une position de départ Pd proche de la position réelle du véhicule et les positions ultérieurement définies sont, elles, relativement proches de la position réelle du véhicule car elles ont été calculées, depuis la position recalée, en utilisant des informations de vitesses non leurrées (puisque constituées des données inertielles de positionnement qui ne sont pas affectées par l'opération de leurrage). La navigation opérationnelle de secours n'est ici utilisée que pendant la durée Dld pendant laquelle l'opération de leurrage est détectée.

Il est donc important de pouvoir détecter une fin tld' de l'opération de leurrage pour utiliser à nouveau, et en confiance, la navigation opérationnelle primaire pour guider le véhicule.

Généralement, au moment où le récepteur de signaux satellitaires 20 échappe à l'opération de leurrage (généralement parce que le récepteur de signaux satellitaires 20 arrive hors de portée du dispositif leurrant D ou que ledit dispositif D a été mis à l'arrêt), la position fournie par la première navigation de référence est fortement décalée par rapport aux précédentes positions fournies par la première navigation de référence (on devrait dire anormalement décalée compte tenu de la vitesse et des capacités de manœuvre du véhicule). Ce brusque décalage de position (visible en E sur la figure 2 : on parle aussi d'un échelon dans la trajectoire Nréf1) peut donc être utilisé comme signal pour arrêter l'utilisation de la navigation opérationnelle de secours et recommencer à utiliser la navigation opérationnelle primaire.

Selon une caractéristique supplémentaire de l'invention, l'utilisation de la navigation opérationnelle de secours est interrompue lorsque la trajectoire fournie par la première navigation de référence est brusquement ramenée vers la trajectoire Nop' issue de la navigation opérationnelle de secours. Autrement dit la position fournie par la première navigation de référence se rapproche d'un seul coup de la position fournie par la navigation opérationnelle de secours en créant un échelon dans la trajectoire fournie par la première navigation de référence.

Lorsqu'un tel échelon est détecté, l'opération de leurrage est considérée comme terminée : la navigation opérationnelle de secours est abandonnée au profit de la navigation opérationnelle primaire qui est à nouveau utilisée pour guider le véhicule.

Bien entendu, l'invention n'est pas limitée au mode de réalisation décrit mais englobe toute variante entrant dans le champ de l'invention telle que définie par les revendications.

En particulier, le système de navigation du véhicule peut être différent de celui décrit.

Le véhicule peut être équipé de plusieurs centrales inertielles fournissant chacune une navigation inertielle. On pourra prévoir d'utiliser chacune de ces navigations inertielles comme navigation de référence pour la détection de leurrage : il y aura donc autant de processus de détection distincts qui seront combinés pour assurer une détection consolidée. En variante, seulement une partie des navigations inertielles peut être utilisée comme navigation de référence. En variante encore, il est possible d'utiliser une moyenne de tout ou partie de ces navigations inertielles pour former une navigation de référence pour la détection de leurrage.

L'unité électronique de navigation peut être intégrée dans la centrale de positionnement inertiel : un seul calculateur peut alors être utilisé.

Par ailleurs, pour le calcul des différents indicateurs (cumul et direction des corrections), la première navigation de référence peut mettre en œuvre un test d'innovation. Ainsi, la navigation opérationnelle (avec test d'innovation) peut être utilisée comme première navigation de référence, simplifiant ainsi l'architecture de la solution et détriment d'une dégradation de la performance de détection. La navigation opérationnelle et la première navigation de référence ne font en effet qu'une, la navigation opérationnelle ayant une double fonction : permettre de guider le véhicule et servir de base pour le calcul des différents indicateurs (cumul et direction des corrections). De préférence, néanmoins, la première navigation de référence est distincte de la navigation opérationnelle et ne met pas en œuvre de test d'innovation pour être plus sensible au leurrage.

Pour une application à un récepteur satellitaire agencé pour recevoir des signaux satellitaires des satellites de plusieurs systèmes de positionnement par satellites (GNSS), on prévoira avantageusement de réaliser une détection de leurrage pour chacun de ces systèmes.

Le seuil prédéterminé de vitesse peut être différent de celui mentionné plus haut et par exemple égal à :
- un multiple d'un écart-type calculé à partir d'une loi de distribution des écarts de vitesse, le multiple étant de préférence 3 ;
- une valeur prédéterminée d'écart de vitesse, de préférence 3 mètres par seconde environ.

L'unité électronique de navigation 40 peut être agencée pour estimer pour la première navigation de référence au moins un biais accélérométrique et comparer le biais accélérométrique estimé à un seuil prédéterminé.

Indépendamment des autres processus, le procédé peut comprendre les étapes de :
- déterminer un écart entre la vitesse issue de la première navigation de référence et la vitesse issue de la deuxième navigation de référence, et comparer cet écart à un seuil prédéterminé ;
- estimer à partir de la première navigation de référence au moins un biais accélérométrique et le comparer à un seuil prédéterminé ;
- estimer à partir de la première navigation de référence au moins une dérive gyrométrique et la comparer à un seuil prédéterminé ;
- émettre une alerte en cas de dépassement d'un des seuils prédéterminés.

Il est possible, mais pas obligatoire, d'attribuer une note minimale au premier dépassement de seuil et de la relever à chaque fois qu'un autre seuil est dépassé, la probabilité d'existence d'une opération de leurrage étant proportionnelle au nombre de dépassements.

Le procédé peut comprendre les étapes de :
- estimer à partir de la première navigation de référence des erreurs de capteurs de la centrale de positionnement inertielle ;
- comparer l'estimation d'erreur de chaque capteur à un seuil prédéterminé ;
- émettre une alerte en fonction du nombre de dépassements de seuil, la probabilité d'existence d'une opération de leurrage étant proportionnelle au nombre de dépassements.

Bien que la combinaison des processus de détection soit extrêmement efficace, l'invention s'applique à l'utilisation d'un seul de ces processus de navigation, ou de deux ou plus en association.

Le programme peut mettre en œuvre un ou plusieurs filtres de Kalman.

Le système de notation peut être différent de celui décrit. Dans le cas où N processus de détection sont mis en œuvre, on peut prévoir que la note varie de 1 à N avec :
- une note inférieure à N/3 pour indiquer une menace peu crédible
- une note comprise entre N/3 et 2.N/3 pour indiquer une menace potentielle ;
- une note supérieure à 2.N/3 pour indiquer la présence crédible d'une menace.

D'autres choix de notation sont possibles afin de limiter les risques de fausse alarme ou de non détection.

Les corrections de position peuvent être cumulées pendant une durée différente de celle mentionnée. Par exemple, le cumul des corrections de position peut être effectué depuis la mise sous tension de l'unité électronique de navigation et non plus sur une fenêtre temporelle glissante.

On peut utiliser comme coefficient de variabilité l'inverse de la variance et le comparer à un troisième seuil : l'existence d'une opération de leurrage est détectée si ledit coefficient est supérieur au seuil (et non plus inférieur au seuil comme lorsqu'on utilise directement la variance). Cette remarque est valable pour toutes les valeurs comparées à un seuil.

## Revendications

1. Procédé de navigation au moyen d'un récepteur de signaux satellitaires (20) embarqué dans un véhicule comprenant une unité électronique de navigation (40) reliée au récepteur de signaux satellitaires et à une centrale de positionnement inertiel (30) pour calculer une navigation opérationnelle hybridée à partir de données inertielles de positionnement et de données satellitaires de positionnement en appliquant un test d'innovation, le procédé comprenant les étapes de :
- calculer une première navigation de référence, hybridée à partir des données inertielles de positionnement avec des corrections de position déterminées à partir des données satellitaires de positionnement ;
- calculer une deuxième navigation de référence à partir des données non satellitaires de positionnement ;
- effectuer un cumul des corrections de position fournies par la première navigation de référence ;
- détecter une opération de leurrage du récepteur de signaux satellitaires et utiliser comme navigation de secours la deuxième navigation de référence après avoir recalé la position fournie par la deuxième navigation de référence lors de la détection de l'opération de leurrage sur la position fournie par la navigation opérationnelle puis avoir corrigé cette position en fonction du cumul des corrections de position pour obtenir une position de départ de la navigation de secours.

2. Procédé selon la revendication 1, dans lequel la première navigation de référence ne met pas en œuvre de test d'innovation.

3. Procédé selon la revendication 1, comprenant une étape de détecter une fin de l'opération de leurrage et une étape ultérieure de revenir à la navigation opérationnelle.

4. Procédé selon la revendication 3, dans lequel la fin de l'opération de leurrage est considérée comme détectée lorsque la première navigation de référence fournit une trajectoire présentant un échelon.

5. Procédé selon la revendication 3, dans lequel la fin de l'opération de leurrage est considérée comme détectée lorsque la première navigation de référence fournit une trajectoire présentant un échelon ramenant ladite trajectoire vers la position fournie par la navigation opérationnelle de secours.

6. Système de navigation comprenant une unité électronique de navigation programmée pour mettre en œuvre un procédé selon l'une quelconque des revendications précédentes.

## Patentansprüche

1. Navigationsverfahren für die Navigation mithilfe eines Satellitensignalempfängers (20), der in einem Fahrzeug mitgeführt wird, welches eine elektronische Navigationseinheit (40) umfasst, die mit dem Satellitensignalempfänger und einer inertialen Positionsmesseinheit (30) verbunden ist, um unter Anwendung eines Innovationstests eine funktionsfähige Hybridnavigation bestehend aus inertialen Positionsdaten und satellitengestützten Positionsdaten zu berechnen, wobei das Verfahren die Schritte umfasst, dass:
- aus den inertialen Positionsdaten zusammen mit Positionskorrekturen, die aus satellitengestützten Positionsdaten ermittelt wurden, eine erste, hybridisierte Referenznavigation berechnet wird;
- aus den nicht satellitengestützten Positionsdaten eine zweite Referenznavigation berechnet wird;
- eine Kumulierung der von der ersten Referenznavigation bereitgestellten Positionskorrekturen durchgeführt wird;
- ein Täuschungsbetrieb zur Täuschung des Satellitensignalempfängers erkannt wird und die zweite Referenznavigation als Backup-Navigation verwendet wird, nachdem bei der Erkennung des Täuschungsbetriebs die von der zweiten Referenznavigation bereitgestellte Position neu an die von der funktionsfähigen Navigation bereitgestellte Position angepasst wurde und dann diese Position gemäß den kumulierten Positionskorrekturen korrigiert wurde, um eine Startposition für die Backup-Navigation zu erhalten.

2. Verfahren nach Anspruch 1, wobei die erste Referenznavigation keinen Innovationstest durchführt.

3. Verfahren nach Anspruch 1, umfassend einen Schritt, in dem ein Ende des Täuschungsbetriebs erkannt wird, und einen Folgeschritt, in dem eine Rückkehr zu der funktionsfähigen Navigation erfolgt.

4. Verfahren nach Anspruch 3, wobei das Ende des Täuschungsbetriebs dann als erkannt gilt, wenn die erste Referenznavigation einen Kursverlauf bereitstellt, der eine Stufe aufweist.

5. Verfahren nach Anspruch 3, wobei das Ende des Täuschungsbetriebs dann als erkannt gilt, wenn die erste Referenznavigation einen Kursverlauf bereitstellt, der eine Stufe aufweist, welche besagten Kursverlauf zu jener Position zurückführt, die von der funktionsfähigen Backup-Navigation bereitgestellt wird.

6. Navigationssystem umfassend eine elektronische Navigationseinheit, die derart programmiert ist, dass sie das Verfahren nach einem der vorhergehenden Ansprüche ausführt.

## Claims

1. Navigation method by means of a satellite signal receiver (20) embedded in a vehicle comprising an electronic navigation unit (40) connected to the satellite signal receiver and to an inertial positioning unit (30) for computing an operational navigation that is hybridised on the basis of inertial positioning data and satellite positioning data by applying an innovation test, the method comprising the following steps of:
computing a first reference navigation that is hybridised on the basis of inertial positioning data with positional corrections determined on the basis of satellite positioning data;
computing a second reference navigation on the basis of non-satellite positioning data;
performing a cumulation of the positional corrections provided by the first reference navigation;
detecting a deception operation of the satellite signal receiver and using as emergency navigation the second reference navigation after having reset the position provided by the second reference navigation during the detection of the deception operation to the position provided by the operational navigation and then having corrected this position according to the cumulation of the positional corrections to obtain a starting position of the emergency navigation.

2. Method according to claim 1, wherein the first reference navigation does not implement an innovation test.

3. Method according to claim 1, including a step of detecting an end of the deception operation and a subsequent step of returning to operational navigation.

4. Method according to claim 3, wherein the end of the deception operation is considered as detected when the first reference navigation provides a trajectory having a level.

5. Method according to claim 3, wherein the end of the deception operation is considered as detected when the first reference navigation provides a trajectory having a level bringing said trajectory back to the position provided by the emergency operational navigation.

6. Navigation system comprising an electronic navigation unit programmed to implement a method according to any one of the preceding claims.
